# EUROPEAN PATENT SPECIFICATION

(11) **EP 3 611 239 B1**
(45) Date of publication and mention of the grant of the patent: **16.11.2022**
(21) Application number: 18382614.8
(22) Date of filing: 17.08.2018
(51) Int. Cl.: C09K 5/06, F28D 20/02, F28D 1/04

(54) **THERMAL ACCUMULATOR CONTAINING A PCM**
WÄRMESPEICHER MIT EINEM PCM
ACCUMULATEUR THERMIQUE CONTENANT UN PCM

(43) Date of publication of application: 19.02.2020
(73) Proprietor: Biofreshtec S.L., 08172 San Cugat Del Valles (ES)
(72) Inventor: GUILLÉN MARTÍNEZ, Javier, 08172 Sant Cugat del Vallès (ES)
(74) Representative: Curell Suñol S.L.P.

(56) References cited:
- WO-A1-2014/178015
- US-A- 5 065 598
- US-A- 6 148 634
- US-A1- 2007 194 270
- US-A1- 2015 316 309
- US-A1- 2018 031 333

## Description

### Field of the Invention

The invention relates to a thermal equipment containing a PCM (phase change material) for charging a thermal load and later delivering it to an external environment.

More specifically, the invention relates to a thermal accumulator containing a PCM, said thermal accumulator comprising external walls delimiting a closed storage space, a PCM contained in said storage space and at least a heat exchanger formed by a conduit for fluids which has an inlet port and an outlet port, said heat exchanger being arranged so that it exchanges heat with said PCM, wherein said external walls are made of metal and have an inner surface in contact with said PCM and an outer surface in contact with an external environment surrounding said thermal accumulator.

### State of the Art

The thermal accumulators to which the invention refers are generally used to refrigerate an environment by direct contact with the external walls of the thermal accumulator. The thermal accumulator is previously charged with a cooling load by circulating a coolant through the heat exchanger, making the PCM to change phase from liquid to solid. The thermal accumulator is fully charged with the cooling load when all the PCM is in solid state. The coolant can either be a liquid that maintains its liquid state, for instance a liquid that circulates in a secondary circuit of a refrigeration unit, or a refrigerant that is evaporated in the heat exchanger. In this last case, the heat exchanger of the thermal accumulator is the evaporator of a refrigeration unit that typically comprises an evaporator, a compressor, a condenser and an expansion valve. The heat exchanger can be connected to the rest of the refrigeration unit either permanently or detachably by means of connection hoses. Once the PCM contained in the thermal accumulator has been charged with the cooling load, the refrigeration unit is turned off. The thermal accumulator can then refrigerate the environment in an autonomous manner (without the refrigeration unit) during a long period of time by transferring the cooling load to the environment. This transfer is operated by heat exchange between the environment and the PCM through the external walls of the thermal accumulator, while the PCM progressively returns to the liquid phase. The temperature of the external walls remains cold and sensibly constant since the PCM stays at its phase change temperature.

WO2014178015A1 discloses a thermal accumulators of this type in which the external walls that enclose the PCM are made of aluminium and the PCM is a mixture of water and hydrogen peroxide. US20150316309A1 suggests the use of propylene glycol as PCM, as an alternative to hydrogen peroxide.

US6148634A discloses a multistage refrigeration system comprising a thermal storage reservoir containing a PCM. The system has a first refrigeration loop with a first refrigerant, a second refrigeration loop with a second refrigerant, and a third refrigeration loop with a third refrigerant. The thermal storage reservoir containing a PCM is provided in the second refrigeration loop and does not exchange heat with the external environment through its external walls. In a preferred embodiment the PCM is made by mixing 20 percent by weight of potassium formate with water.

US5065598A discloses a thermal storage apparatus that uses as PCM water with an additive. The water in liquid state is supercooled by circulating in a refrigerating apparatus and is subsequently made into ice in the form of sherbet by a desupercooling apparatus over a thermal storage tank. The remaining water in liquid state in the thermal storage tank is recirculated by a pump into the refrigerating apparatus, so that ice is continuously formed in the thermal storage tank without having to pump a brine. The additive in water has the sole purpose of stably securing a supercooled state, so that ice is not formed in the recirculating circuit. Potassium formate and sodium formate are cited as possible additives, among other compounds. The concentration of additive in water is very low, between 0.05 and 0.5 % in weight. Using a greater concentration of additive is discouraged, because the supercooled stability increases too much so that making ice from the supercooled state in the desupercooling apparatus becomes difficult.

### Description of the Invention

The purpose of the invention is to provide a thermal accumulator of the type indicated above in which the PCM is compatible with metals, is safer and easier to use and provides better thermal behaviour of the thermal accumulator.

This is achieved by means of a thermal accumulator according to claim 1. The PCM is an aqueous salt solution in which the solute is sodium formate.

This formate brine is particularly suitable as PCM for a thermal accumulator of the type referred to by the invention because it is non-corrosive for metals, because the use thereof as PCM in a thermal accumulator does not pose any complication and is not risky both for the human health and the environment, and because its behaviour in terms of heat transfer and heat accumulation is particularly advantageous.

This formate brine according to the invention is very stable over time, in contrast with hydrogen peroxide that decomposes into H₂O and O₂. This progressive decomposition of hydrogen peroxide obliges to regularly purge the O₂ accumulated in the closed storage space and also causes a progressive loss of the thermal properties of the PCM. By contrast, the formate brine according to the invention remain unaltered in the closed storage space and keep its thermal properties intact during an endless number of heat loading/unloading cycles. Another advantage of the formate brine according to the invention over hydrogen peroxide is that it is also stable at higher temperatures over the melting point, and therefore it is suitable to be used as sensitive heat accumulator. This allows the thermal accumulator to be used both as a latent heat accumulator and as a sensible heat accumulator. The hydrogen peroxide is not suitable to this purpose, because the above mentioned decomposition is accelerated when the temperatures increases.

The formate brine according to the invention is also advantageous over the use of propylene glycol as PCM for several reasons. The thermal conductivity of this formate brine is much higher, and the solid-liquid phase change enthalpy is also much higher.

Therefore, the use of this formate brine as PCM provides a higher heat transfer rate by conduction inside the PCM and also provides a higher accumulation of heat by phase-change per unit volume of PCM. Moreover, in this formate brines the kinetics of crystal formation is much better, so that the phase-change temperature remains almost constant (typically with a variation under 1 °C) between the formation of the first crystals and the formation of the last crystals, and there is no need to significantly subcool the liquid in order to trigger the crystallization (typically a sub-cooling of 1°C is enough). By contrast, when a glycol solution is used as PCM the variation of phase-change temperature is typically between 5 °C and 10 °C and a sub-cooling of up to 10 °C can be needed.

The PCM is an aqueous salt solution in which the solute is sodium formate. Sodium formate is not harmful to the environment and is suitable for food contact applications. The thermal accumulator according to claim 1 is particularly suitable for being used in conditioning environments in which food or pharmaceutical products are present.

In some preferred embodiments, in which the thermal accumulator is intended to refrigerate an external environment, the PCM is an aqueous salt solution in which the solute is sodium formate and wherein the mass fraction of sodium formate in the solution is comprised between 0.05 and 0.25. The crystallization temperature of the brine in this range of mass fraction is between - 4 °C and - 16 °C. This is particularly suitable for refrigerating an environment that must be kept at temperatures between - 5 °C and + 25 °C, like for instance a refrigerated container in which food or pharmaceutical products are stored.

In other preferred embodiments, in which the thermal accumulator is intended to have a dual function of refrigerating and heating an external environment, depending on the seasonal temperature of said environment, the PCM is an aqueous salt solution in which the solute is sodium formate, wherein the mass fraction of sodium formate in the solution is comprised between 0.45 and 0.55. The crystallization temperature of the brine in this range of mass fraction is between + 6 °C and + 15 °C. A crystallization temperature, or phase change temperature, of the PCM greater than 0 °C is particularly suitable for providing a dual function of refrigerating or heating an environment that is submitted to seasonal or daily temperature variations and in which goods are stored that must be maintained cool but without freezing. If the temperature of the environment is greater than the phase change temperature of the PCM, the thermal accumulator refrigerates the environment, otherwise the same thermal accumulator heats the environment.

The external walls of the thermal accumulator which delimit the closed storage space for the PCM are advantageously made of a metal having a high thermal conductivity, preferably a thermal conductivity greater than 200 W/(m.K). For instance, a 6000 series aluminium alloy could be used. However, in the preferred embodiments said external walls are made of copper. The term copper is used here in the sense of a copper alloy having a composition of Cu of at least 99.5%. The formate brines used as PCM according to the invention are compatible in particular with copper, which has a thermal conductivity very high, over 60% higher than aluminium, so that the external walls made of copper provide a much better heat exchange between the external environment and the core of the PCM.

The heat exchanger can be adhered on the outer side of one or several of the external walls, so that it exchanges heat with the PCM by conduction through the external wall. However, taking advantage on the good compatibility with metals of the formate brines used as PCM, in the preferred embodiments the heat exchanger has a section made of metal, preferably made of copper, that goes inside the storage space delimited by the external walls and which is in contact with the PCM. This configuration provides a more efficient heat exchange between the heat exchanger and the PCM.

In addition, taking advantage on the good compatibility with metals of the formate brines used as PCM, the thermal accumulator preferably comprises internal walls made of metal, more preferably made of copper, said internal walls being located inside the storage space and extending from at least one of the external walls. These internal walls conduct heat between the external walls and the PCM located inside the storage space, providing by this way a more efficient heat exchange between the PCM and the environment.

The invention also comprises other detail features illustrated in the following detailed description of an embodiment of the invention and in the attached drawings.

### Brief Description of the Drawings

The advantages and features of the invention will be understood from the following description in which preferred embodiments of the invention are described with reference to the drawings without limiting the scope of the invention defined in the claims.
Fig. 1 is a perspective view of a first embodiment of the thermal accumulator, in which the frontal external wall and partially the upper external wall have been cropped in order to show the inner parts of the thermal accumulator.
Fig. 2 is a sectional frontal view of the thermal accumulator of Fig. 1.
Fig. 3 is a sectional top view of the thermal accumulator of Fig. 1.
Fig. 4 is a zoomed view of an area of Fig. 3 showing a straight tube of the heat exchanger at the corner between an external wall and an internal wall.

### Detailed Description of Embodiments of the Invention

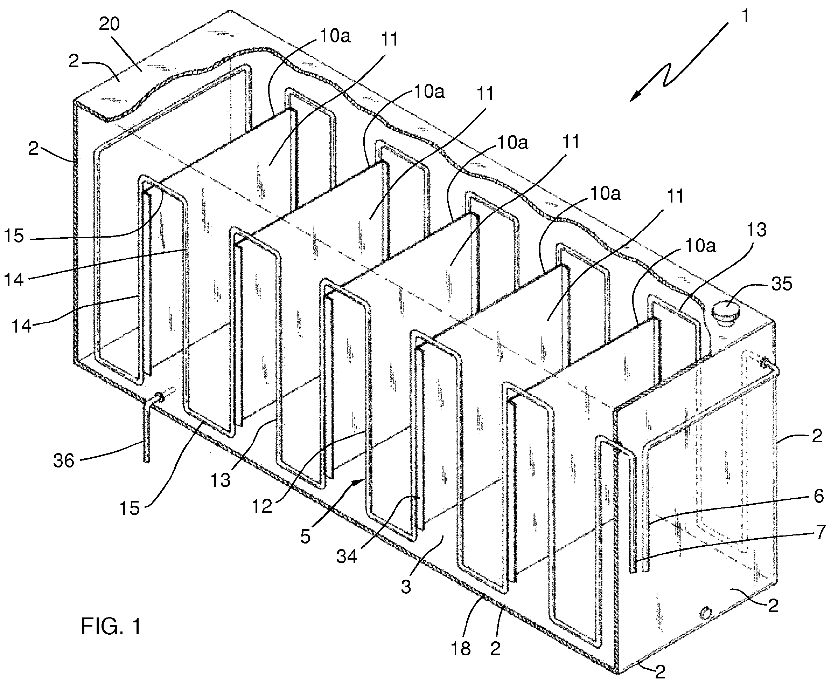

Figs. 1 to 4 show an embodiment of the thermal accumulator 1.

The thermal accumulator 1 is constituted by six external walls 2 forming a rectangular parallelepiped which delimitate a storage space 3, several internal walls 10a that connect between them two facing of said external walls 2, and a heat exchanger 5 having a section 12 that goes inside the storage space 3. The storage space 3 contains a PCM (phase change material) 4 which is in contact with said section 12 of the heat exchanger 5 and with the inner surface 8 of the external walls 2. The outer surface 9 of the external walls 2 are in contact with the external environment surrounding the thermal accumulator 1, so that the PCM 4 exchanges heat with the external environment through said external walls 2.

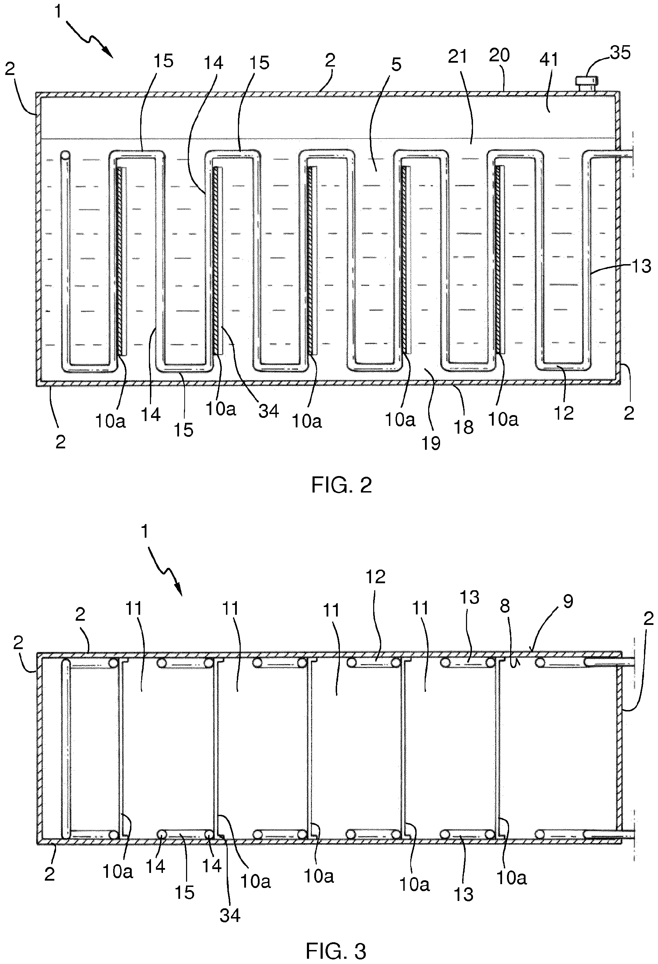

The external walls 2 and the internal walls 10a are copper sheets. For instance, they are 0.0197 inch (0.5 mm) thick sheets of soft annealed Copper Alloy 110 (containing at least 99.9 % of copper). The internal walls 10a have folded ends that form planar flanges 34 which rest against the inner surface 8 of said two facing external walls 2 and which are joined to said inner surface 8 preferably by brazing. The internal walls 10a are parallel between them and transversal to the two facing external walls 2, so that these walls 10a, 2 form cells 11 that contain PCM 4 in the storage space 3. As can be appreciated in Fig. 2, the internal walls 10a are separated from a bottom wall 18 and from an upper wall 20 which delimitate the storage space 3. In this exemplary embodiment the bottom wall 18 and the upper wall 20 are also external walls 2. A lower band 19 and an upper band 21 of the storage space 3 are thus defined between the bottom wall 18 and a lower edge of the internal walls 10a, and between the upper wall 20 and an upper edge of said internal walls 10a, respectively. The storage space 3 is filled with PCM 4 so that the level of PCM 4 in said storage space 3 is in the upper band 21. The cells 11 are thus in fluid communication with one another through the lower band 19 and the upper band 21. Therefore, the fraction of PCM 4 which is in liquid state can circulate between the cells 11 through these bands 19, 21. As it can also be appreciated from Fig. 2, an air gap 41 is provided between the level of PCM 4 and the upper wall 20. This air gap 41 acts as an expansion chamber to absorb the variations of volume of the PCM 4 at the phase change. The upper wall 20 is provided with a cap 35 than can be removed to fill the storage space 3 with PCM 4. At least a temperature probe 36 is inserted in the storage space 3 for measuring the temperature of the PCM 4 in order to control the process of charging the thermal accumulator 1 with a thermal load and also for monitoring the state of the PCM 4 during the phase of delivering the thermal load to the environment.

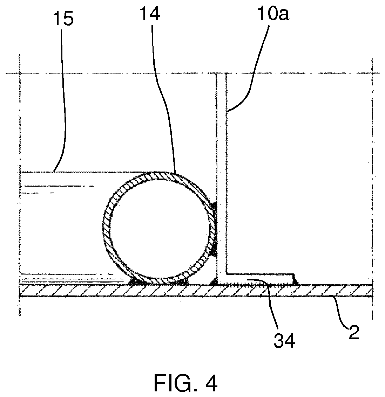

The section 12 of the heat exchanger 5 that goes inside the storage space 3 is a coil tube comprising two planar sections 13 which are parallel to one and the other of the two facing external walls 2 and which are joined to one and the other of said two facing external walls 2. This coil tube is also made of Copper Alloy 110. Each planar section 13 of the coil tube comprises a succession of straight tubes 14 connected to one another by tube elbows 15. The straight tubes 14 are positioned so that, at the corners formed between one of the two facing external walls 2 and the internal wall 10a connected to it, one of said straight tubes 14 is joined to a face of at least one of the external wall 2 and the internal wall 10a. Preferably, they are joined to both walls 2, 10a as shown in Fig. 4. In the exemplary embodiment, the straight tubes 14 are joined to the walls 2, 10a by brazing. Each of said planar sections 13 of the heat exchanger 5 is thus joined to a face of one of the two facing external walls 2. As can be seen in Figs. 1 and 2, the tube elbows 15 pass from one cell 11 to another through the lower band 19 and the upper band 21.

The heat exchanger 5 is formed by a conduit for fluids, in this case in form of a coil tube, and has an inlet port 6 and an outlet port 7, so that a heat transfer fluid can enter the thermal accumulator 1 through the inlet port 6, flow inside said heat exchanger 5 while exchanging heat with the PCM 4 and exit the thermal accumulator 1 through the outlet port 7. This heat transfer fluid circulating in the heat exchanger 5 provides a thermal load to charge the thermal accumulator 1.

Other structural configurations of the thermal accumulator 1 are possible. For instance, the internal walls 10a can be interrupted so that they do not join two facing external walls 2. The section 12 of the heat exchanger 5 that goes inside the storage space 3 can be a coil tube that comprises inner sections which are separated from the external walls and which are joined to at least one of the internal walls 10a. The internal walls 10a can extend on different directions. For instance, the thermal accumulator 1 can comprise longitudinal internal walls which are orthogonal to the transversal internal walls 10a shown in Fig. 3.

The PCM is an aqueous salt solution in which the solute is sodium formate.

The following examples are some possible preferred choices for the PCM.

### Example 1 (solute: sodium formate)

The PCM 4 is an aqueous salt solution in which the solute is sodium formate. The mass fraction of sodium formate in the solution is selected in the range between 0.05 and 0.25. The crystallization temperature of the brine in this range of mass fraction is the following:

| Mas fraction of sodium formate | Crystallization temperature |
|---|---|
| 0.05 | - 4 °C |
| 0.10 | - 9 °C |
| 0.25 | - 16 °C |

### Example 2 (solute: sodium formate)

The PCM is an aqueous salt solution in which the solute is sodium formate. The mass fraction of sodium formate in the solution is selected in the range between 0.45 and 0.55.The crystallization temperature of the brine in this range of mass fraction is the following:

| Mas fraction of sodium formate | Crystallization temperature |
|---|---|
| 0.45 | + 6°C |
| 0.55 | + 15 °C |

Besides these examples, the PCM can include suitable additives in addition to said formate salt.

## Claims

1. Thermal accumulator (1) containing a PCM (phase change material), said thermal accumulator (1) comprising external walls (2) delimiting a closed storage space (3), a PCM (4) contained in said storage space (3) and at least a heat exchanger (5) formed by a conduit for fluids which has an inlet port (6) and an outlet port (7), said heat exchanger (5) being arranged so that it exchanges heat with said PCM (4), wherein said external walls (2) are made of metal and have an inner surface (8) in contact with said PCM (4) and an outer surface (9) in contact with an external environment surrounding said thermal accumulator (1), **characterised in that** said PCM (4) is an aqueous salt solution in which the solute is sodium formate.

2. Thermal accumulator (1) according to claim 1, **characterised in that** said PCM (4) is an aqueous salt solution in which the solute is sodium formate, wherein the mass fraction of sodium formate in the solution is comprised between 0.05 and 0.25.

3. Thermal accumulator (1) according to claim 1, **characterised in that** said PCM (4) is an aqueous salt solution in which the solute is sodium formate, wherein the mass fraction of sodium formate in the solution is comprised between 0.45 and 0.55.

4. Thermal accumulator (1) according to any one of claims 1 to 3, **characterised in that** said external walls (2) are made of copper.

5. Thermal accumulator (1) according to any one of claims 1 to 4, **characterised in that** said heat exchanger (5) has a section (12) made of metal that goes inside said storage space (3) and which is in contact with said PCM (4).

6. Thermal accumulator (1) according to claim 5, **characterised in that** said section (12) of the heat exchanger (5) that goes inside said storage space (3) is made of copper.

7. Thermal accumulator (1) according to any one of claims 1 to 6, **characterised in that** it comprises internal walls (10a) made of metal, said internal walls (10a) being located inside said storage space (3) and extending from at least one of said external walls (2).

8. Thermal accumulator (1) according to claim 7, **characterised in that** said internal walls (10a) are made of copper.

## Patentansprüche

1. Thermischer Akkumulator (1), der ein PCM (Phasenwechselmaterial) enthält, wobei der thermische Akkumulator (1) externe Wände (2), die einen geschlossenen Speicherraum (3) umgrenzen, ein in dem Speicherraum (3) enthaltenes PCM (4) und zumindest einen Wärmetauscher (5), der durch eine Leitung für Fluide gebildet ist, welcher einen Einlassdurchgang (6) und einen Auslassdurchgang (7) aufweist, umfasst, wobei der Wärmetauscher (5) so angeordnet ist, dass er Wärme mit dem PCM (4) austauscht, wobei die externen Wände (2) aus Metall hergestellt sind und eine innere Oberfläche (8) in Kontakt mit dem PCM (4) und eine äußere Oberfläche (9) in Kontakt mit einer, den thermischen Akkumulator (1) umgebenden externen Umwelt aufweisen, **dadurch gekennzeichnet, dass** das PCM (4) eine wässrige Salzlösung ist, in der der lösliche Stoff Natriumformiat ist.

2. Thermischer Akkumulator (1) gemäß Anspruch 1, **dadurch gekennzeichnet, dass** das PCM (4) eine wässrige Salzlösung ist, in der der lösliche Stoff Natriumformiat ist, wobei der Massenanteil von Natriumformiat in der Lösung zwischen 0,05 und 0,25 umfasst.

3. Thermischer Akkumulator (1) gemäß Anspruch 1, **dadurch gekennzeichnet, dass** das PCM (4) eine wässrige Salzlösung ist, in der der lösliche Stoff Natriumformiat ist, wobei der Massenanteil von Natriumformiat in der Lösung zwischen 0,45 und 0,55 umfasst.

4. Thermischer Akkumulator (1) gemäß einem der Ansprüche 1 bis 3, **dadurch gekennzeichnet, dass** die externen Wände (2) aus Kupfer hergestellt sind.

5. Thermischer Akkumulator (1) gemäß einem der Ansprüche 1 bis 4, **dadurch gekennzeichnet, dass** der Wärmetauscher (5) einen aus Metall hergestellten Abschnitt (12) aufweist, der in den Speicherbereich (3) geht und der in Kontakt mit dem PCM (4) ist.

6. Thermischer Akkumulator (1) gemäß Anspruch 5, **dadurch gekennzeichnet, dass** der Abschnitt (12) des Wärmetauschers (5), der in den Speicherbereich (3) geht, aus Kupfer hergestellt ist.

7. Thermischer Akkumulator (1) gemäß einem der Ansprüche 1 bis 6, **dadurch gekennzeichnet, dass** er aus Metall hergestellte, interne Wände (10a) umfasst, wobei die internen Wände (10a) innerhalb des Speicherraums (3) lokalisiert sind und sich von zumindest einer der externen Wände (2) erstrecken.

8. Thermischer Akkumulator (1) gemäß Anspruch 7, **dadurch gekennzeichnet, dass** die internen Wände (10a) aus Kupfer hergestellt sind.

## Revendications

1. Accumulateur thermique (1) contenant un MCP (matériau à changement de phase), ledit accumulateur thermique (1) comprenant des parois externes (2) délimitant un espace de stockage fermé (3), un MCP (4) contenu dans ledit espace de stockage (3) et au moins un échangeur de chaleur (5) formé d'un conduit pour des fluides qui comporte un orifice d'entrée (6) et un orifice de sortie (7), ledit échangeur de chaleur (5) étant agencé de sorte qu'il échange de la chaleur avec ledit MCP (4), dans lequel lesdites parois externes (2) sont constituées de métal et comportent une surface interne (8) en contact avec ledit MCP (4) et une surface externe (9) en contact avec un environnement externe entourant ledit accumulateur thermique (1), **caractérisé en ce que** ledit MCP (4) est une solution aqueuse de sel dans laquelle le soluté est le formiate de sodium.

2. Accumulateur thermique (1) selon la revendication 1, **caractérisé en ce que** ledit MCP (4) est une solution aqueuse de sel dans laquelle le soluté est le formiate de sodium, dans lequel la fraction massique de formiate de sodium dans la solution est comprise entre 0,05 et 0,25.

3. Accumulateur thermique (1) selon la revendication 1, **caractérisé en ce que** ledit MCP (4) est une solution aqueuse de sel dans laquelle le soluté est le formiate de sodium, dans lequel la fraction massique de formiate de sodium dans la solution est comprise entre 0,45 et 0,55.

4. Accumulateur thermique (1) selon l'une quelconque des revendications 1 à 3, **caractérisé en ce que** lesdites parois externes (2) sont constituées de cuivre.

5. Accumulateur thermique (1) selon l'une quelconque des revendications 1 à 4, **caractérisé en ce que** ledit échangeur de chaleur (5) a une section (12) constituée de métal qui pénètre à l'intérieur dudit espace de stockage (3) et qui est en contact avec ledit MCP (4).

6. Accumulateur thermique (1) selon la revendication 5, **caractérisé en ce que** ladite section (12) de l'échangeur de chaleur (5) qui pénètre à l'intérieur dudit espace de stockage (3) est constituée de cuivre.

7. Accumulateur thermique (1) selon l'une quelconque des revendications 1 à 6, **caractérisé en ce qu'**il comprend des parois internes (10a) constituées de métal, lesdites parois internes (10a) étant situées à l'intérieur dudit espace de stockage (3) et s'étendant depuis au moins une desdites parois externes (2).

8. Accumulateur thermique (1) selon la revendication 7, **caractérisé en ce que** lesdites parois internes (10a) sont constituées de cuivre.
